# EUROPEAN PATENT APPLICATION

(11) **EP 1 215 490 A2**
(43) Date of publication of application: **19.06.2002**
(21) Application number: 01204819.5
(22) Date of filing: 10.12.2001
(51) Int. Cl.: G01N 27/407

(54) **Slip method for making exhaust sensors**

(30) Priority: 18.12.2000 US 741771
(71) Applicant: Delphi Technologies, Inc., Troy, MI 48007 (US)
(72) Inventor: Beckmeyer, Richard F., Davisburg, MI 48350 (US); La Barge, William J., Bay City, MI 48706 (US); Fouts, Richard Eugene, Grand Blanc, MI 48439 (US); Anderson, Conrad Harry, Davison, MI 48423 (US); Johnson, Jennifer L., Grand Blanc, MI 48439 (US)
(74) Representative: Denton, Michael John

(57) **Abstract**

The sensor (30) comprises an electrolyte (20) disposed between a sensing electrode (21) and a reference electrode (22), with a protective layer (31) contacting the sensing electrode (21). At least one of the sensing electrode (21) and the reference electrode (22) has a porosity of about 15% or greater. The method for manufacturing the sensor comprises employing a slip. The slip is applied to the electrolyte (20) to form the electrodes (21, 22), and the electrolyte (20) is heated to a temperature of less than about 1,500°C.

## Description

### TECHNICAL FIELD

The present disclosure relates to exhaust sensors, and particularly to a method for disposing electrodes on a ceramic in an exhaust sensor.

### BACKGROUND

Oxygen sensors are used in a variety of applications that require qualitative and quantitative analysis of gases. In automotive applications, the direct relationship between oxygen concentration in the exhaust gas and air to fuel ratio (A/F) of the fuel mixture supplied to the engine allows the oxygen sensor to provide oxygen concentration measurements for determination of optimum combustion conditions, maximization of fuel economy, and management of exhaust emissions.

Future emissions requirements will require automobiles to have lower emissions. As a result, future oxygen sensors will need to have faster lag and response times while maintaining durability so that emissions can be reduced during the "cold" portion of the emissions test. Current sensors are designed such that they typically perform most efficiently at elevated temperatures around 600°C. Therefore, while the engine and exhaust system are warming up from a cold start, the sensors do not allow the engine to run at optimum combustion conditions. As a result, emissions at low temperatures can be higher as compared to emissions at the normal operating temperature of the engine. The advanced emissions systems of the future will also require sensors to perform with less variability at normal operating conditions. The addition of heaters in the sensors have reduced the variability, especially at lower temperatures, but additional advances are needed.

A conventional oxygen sensor consists of an ionically conductive solid electrolyte, a sensing electrode on the sensor's exterior, which is exposed to the exhaust gases, a porous protective layer disposed over the sensing electrode, and a reference electrode on the sensor's interior surface exposed to a known oxygen partial pressure. Sensors typically used in automotive applications use a yttria stabilized, zirconia based electrochemical galvanic cell with porous platinum electrodes operating in potentiometric mode to detect the relative amounts of oxygen present in an automobile engine's exhaust. Such sensors indicate qualitatively whether the engine is operating in fuel rich or fuel lean conditions, without quantifying the actual air to fuel ratio of the exhaust mixture.

The performance of the sensor can be influenced by the treatment of the sensor's components during the manufacturing process. During the manufacturing process of a typical electrolyte of a sensor, the stabilized zirconia is sintered, either with a liquid phase present or through solid state methods. Due to impurities, e.g., silica, present in the typical starting zirconia powder, these processes can create a surface that is rich in silica. The presence of the silica is an impedance to oxygen diffusion from the platinum electrode to the zirconia electrolyte, thereby impeding the performance of the sensor.

Solid state sintering is a method that can be used to minimize contamination of the electrodes with impurities coming from the solid electrolyte when co-firing the electrodes. This necessarily requires high temperatures in excess of 1,500°C. However, such high temperatures can over sinter the electrode and cause a loss in low temperature catalytic activity. As a result, a higher wattage heater is needed to compensate for the deficiencies in electrode catalytic activity and interfacial impedance between the platinum electrode and stabilized zirconia electrolyte in order to obtain acceptable performance at lower exhaust temperatures.

Accordingly, there remains a pressing need in the art for improved sensors that can respond to changes in the air to fuel ratio more quickly and perform adequately at low temperatures without the use of increased wattage heater(s).

### SUMMARY

The deficiencies of the above-discussed prior art are overcome or alleviated by the gas sensor and method of producing the same. The sensor comprises an electrolyte disposed between a sensing electrode and a reference electrode, with a protective layer contacting the sensing electrode. At least one of said sensing electrode and said reference electrode has a porosity of about 15% or greater.

The method for manufacturing the sensor comprises employing a slip. The slip is applied to the electrolyte to form the electrodes, and the electrolyte is heated to a temperature of less than about 1,500°C.

### BRIEF DESCRIPTION OF THE DRAWINGS

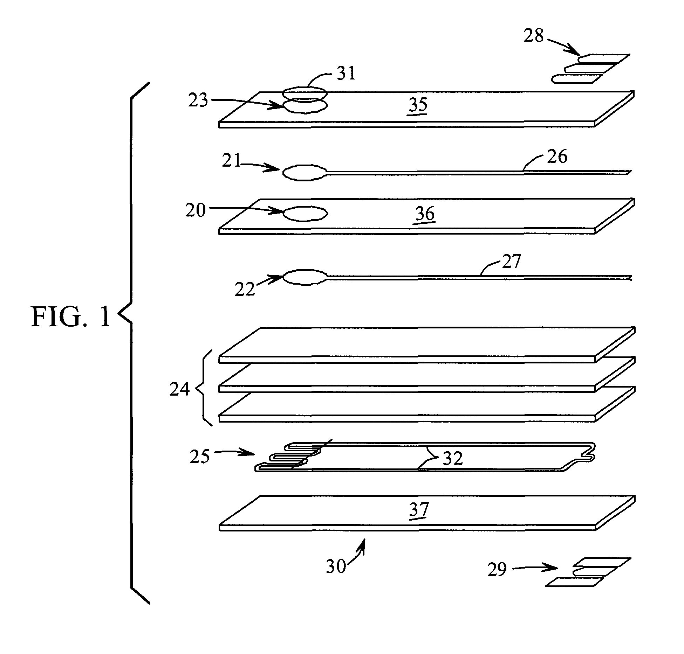

The gas sensor will now be described, by way of example only, with reference to the accompanying drawing, which is meant to be exemplary, not limiting.

The Figure is an expanded view of one embodiment of an oxygen sensor.

### DETAILED DESCRIPTION

Although described in connection with an oxygen sensor, it is to be understood that the sensor could be a nitrogen oxide sensor, hydrogen sensor, hydrocarbon sensor, or the like, having any known geometry (e.g., planar, conical, or the like). Additionally, the electrode could be employed in a spark plug as well as in a sensor. Furthermore, while oxygen is the reference gas used in the description disclosed herein, it should be understood that other gases could be employed as a reference gas.

The sensor comprises an electrolyte disposed between and in ionic communication with a sensing electrode capable of sensing an exhaust gas and a reference electrode capable of sensing a reference gas; an optional protective layer can be disposed on a side of the sensing electrode opposite the electrolyte, with an optional a protective coating disposed on the second side of the protective layer.

In one embodiment, the sensor is configured according to the Figure. The Figure shows a sensor (30) with an ionically conductive solid electrolyte (20), a sensing electrode (21) disposed in ionic communication with the solid electrolyte (20), and a porous protective layer (23) disposed on a side of the sensing electrode (21) opposite the solid electrolyte (20). On a second side of the solid electrolyte (20) is a reference electrode (22). The electrolyte (20) and porous protective layer (23) can be disposed adjacent to or as inserts within dielectric substrate layers 36, 35, respectively. On a second side of the reference electrode (22) can be support layers (24, 37), with a heater (25) disposed therebetween. The reference electrode (22), sensing electrode (21), and heater (25) are connected to contacts (28, 29) on the outer sides of the sensor through vias (not shown) with leads (27, 26, 32) respectively.

The substrate layers (35, 36), support layers (24, 37), heater (25), contacts (28, 29), leads (26, 27, 32), and vias can be composed of materials conventionally used in exhaust sensors. For example, the substrate layers (35, 36) and support layer(s) (24, 37) can comprise a dielectric material such as a metal oxide, e.g., alumina, and the like, while the heater(s) (25), leads (26, 27, 32), vias and contacts (28, 29) can comprise an electrically conductive metal such as platinum, palladium, ruthenium, and the like, and other metals, oxides, alloys and mixtures comprising at least one of the foregoing metals.

The solid electrolyte (20) can comprise any material conventionally employed as sensor electrolytes, including, but not limited to, zirconia which may optionally be stabilized calcium, barium, yttrium, magnesium, aluminum, lanthanum, cesium, gadolinium, and the like, as well as oxides, alloys, and combinations comprising at least one of the foregoing electrolyte materials. The electrolyte can be formed by combining the electrolyte material with optional sintering aide(s) (e.g., alumina, silica and the like), stabilizers, and conventional constituents. Preferably, the electrolyte material, e.g., zirconia, has a purity of about 99.7% or greater, with a purity of about 99.9% or greater preferred. Furthermore, it is especially preferred that the silica content of the electrolyte material be below about 0.1%, with a silica content below about 0.01% even more preferred, based upon the total weight of electrolyte. Additionally, a particle size of less than about 10 microns is preferred, with a particle size of less than about 8 microns especially preferred.

The amount of stabilizer employed is based upon the type of electrolyte material and stabilizer utilized. Typically, for stabilized zirconia, a sufficient amount of stabilizer is employed to stabilize the zirconia in the tetragonal phase. Similarly, a sufficient amount of sintering aide is employed to reduce the sintering temperature while not adversely affecting the electrolytic properties. Generally up to about 15 mole percent (mole%) stabilizer and up to about 15 mole% sintering aide, based upon the total weight of the electrolyte, can be used; with about 1 mole% to about 10 mole% stabilizer preferred and about 1 mole% to about 12 mole% sintering aide preferred. For example, zirconia having a particle size of less than about 0.2 to about 8 microns and a purity of greater than about 99.9% can be co-reacted with up to about 10 mole% yttria and about 2 mole% to about 12 mole% alumina. The resulting electrolyte can be sintered at a temperature of less than about 1,500°C, preferably at a temperature of about 1,480°C or less, and more preferably at a temperature of about 1,400°C to about 1,450°C.

Disposed on or adjacent to both sides of the electrolyte are electrodes (21, 22). These electrodes can comprise a catalyst, as well as a ceramic, fugitive materials, dissolved organometallics, and/or dissolved organics, and the like. Possible catalysts comprise catalysts conventionally employed in sensors, such as metals including platinum, palladium, gold, osmium, rhodium, iridium, silver, ruthenium, zirconium, yttrium, cerium, calcium, aluminum, and the like, as well as alloys, oxides, and combinations comprising at least one of the foregoing materials. Preferably, the electrodes further comprise a ceramic material to enhance hardness and adhesion to the electrolyte. Generally the electrode can comprise up to about 80 wt% ceramic, with up to about 60 wt% ceramic more preferred, and about 15 wt% to about 55 wt% ceramic especially preferred, based upon the total weight of the electrodes. Possible ceramics include metal oxides such as alumina, zirconia, yttria, ceria, strontia, barium cerium oxide, strontium cerium zirconates, barium cerium zirconates, lanthana, magnesia, scandia, and the like, and mixtures comprising at least one of the foregoing metal oxides such as yttria-zirconia, yttria-alumina, scandia-zirconia, scandia-alumina, yttria-alumina-zirconia, scandia-alumina-zirconia, and the like.

The electrodes can be disposed on the electrolyte or on the layer adjacent to the electrolyte, by known methods in the art, including, but not limited to sputtering, plating, screening, striping, inking, and the like. Preferably, the electrodes are formed by dipping the electrolyte into a slip comprising a mixture of metal particles and other additives in a single solvent or a mixture of solvents. As stated above, in addition to metal particles, the slip may contain ceramic particles, fugitive materials, dissolved organics, dissolved organometallics, and the like. Possible fugitive materials, include, but are not limited to, carbon black, graphite, and/or other non-dissolved organics, as well as combinations comprising at least one of the foregoing fugitive materials. Possible dissolved organics, include, but are not limited to, acrylic binders, polyvinyl alcohol, 1-ethoxypropan-2-ol, turpentine, squeegee medium, 1-methoxy-2-propanol acetate, butyl acetate, dibutyl phthalate, fatty acids, acrylic resin, ethyl cellulose, 3-hydroxy,2,2,4-trimethylpentyl isobutyrate, terpineol, butyl carbitol acetate, cetyl alcohol, cellulose ethylether resin, and the like, as well as combinations comprising at least one of the foregoing dissolved organics. Possible dissolved organometallics, include, but are not limited to, zirconium 2-ethyl hexanoate, yttrium 2-ethylhexanoate, aluminum methoxyethanol, zirconium neodecanoates, zirconium naphthenates, zirconium tallates, zirconium carboxylates, yttrium 2-ethyl hexanoate, yttrium neodecanoates, yttrium naphthenates, yttrium tallates, yttrium carboxylates, scandium 2-ethyl hexanoate, aluminum isopropoxide, aluminum 2-ethylhexanoate and aluminum 2-methoxyethanol, and the like, and mixtures comprising at least one of the foregoing organometallics.

Preferably, the thickness of the electrodes is about 1.0 microns to about 25 microns, with a thickness of about 5 microns to about 20 microns preferred, and about 10 microns to about 18 microns more preferred. The electrodes can be fired at a temperature of less than about 1,500°C, preferably at a temperature of less than about 1,450°C, and more preferably at a temperature of about 1,400°C to about 1,450°C.

Disposed adjacent to the second side of the sensing electrode (21) is a protective layer (23) comprising a metal oxide alone or in combination with one or more alkaline earths and/or rare earths. Possible metal oxides include zirconia, alumina, magnesia, titania, and the like; and mixtures comprising at least one of the foregoing metal oxides. Possible metals (alkaline earth and rare earth) comprise barium, calcium, potassium, sodium, lanthanum, neodymium, gadolinium, cerium, and the like and mixtures comprising at least one of the foregoing metals. On the outer surface of the protective layer can be a protective coating (31). The protective coating is preferably a single layer of a material such as alumina, magnesium aluminate, and the like, as well as combinations comprising at least one of the foregoing materials.

### Example

The following example was used to prepare an exhaust sensor having a platinum electrode, yttria doped zirconia electrolyte, alumina support layers, an alumina protective layer, and a protective coating.

A commercially available co-reacted partially stabilized zirconia (PSZ) powder from SEPR, containing 90.0 mole % zirconia, 5.0 mole % yttria, 5.0 mole % alumina, and 0.05 mole % silica, was milled in a dry ball mill to reduce the particle size of the alumina portion to an average size of 1 micron (µ) or smaller. The milled powder was then mixed with organic processing aids, including a binder, in an aqueous blend under high shear to eliminate any agglomeration. The mixture was attrition milled to further de-agglomerate the particles. The batch was spray dried to uniformly disperse the binder, then isostatically molded and ground to the desired shape of the electrolyte. The electrolyte was then masked on one edge and dipped in a slip comprising 14 wt% platinum, 3.4 wt% yttria-zirconia, 1.4 wt% butylacetate, 4.0 wt% dibutyl phthalate, 2.9 wt% ethyl cellulose, 8.0 wt% terpineol, 0.6 wt% butyl carbitol acetate, and 65.7 wt% ethanol, to form separate electrodes, one on each side of the electrolyte, with thicknesses of about 8.4 microns. The element was then fired at 1,450°C to densify the solid electrolyte and form the active electrode having a thickness of about 5.2 microns and a composition of 78 wt% platinum and 22 wt% yttria-zirconia (comprising of 12 mole% yttria). The part was coated with a plasma sprayed magnesium aluminate to form a protective coating, and then coated with an alumina coating to provide poison resistance. The sensor was treated under nitrogen at 800°C to condition the sensor and reduce the green effect.

A sensor prepared as described above, i.e., with dipped electrodes, was tested along with sensors prepared with sputtered electrodes and plated electrodes. Results of the tests are listed in Tables I and II. Table I lists the data from tests conducted at 0.5 Hertz (Hz) at 260°C, with a 12 Watt (W) heater. Table II lists the data from tests conducted at 2 Hz at 595°C.

As can be seen from both Table I and Table II, although Sample 6 possessed a lower Vmax (i.e., maximum voltage derived by catalytic oxidation on the outer sensing electrode) than some other samples, it possessed the rich to lean (RL) versus lowest lean to rich (LR) response time ratio (RL/LR). Typically RL/LRs of less than about 5.0 are required (e.g., if a ratio of 5 or greater is received, a check engine signal is given indicating a sensor is faulty). It is preferred that the faulty sensor signal be triggered at a RL/LR of about 3. Consequently, the sensor should have a ratio well below about 3.0 to ensure a sensor life of at least about 50,000 miles, with up to and exceeding about 100,000 miles preferred. As a result, a RL/LR of about 1.5 or less is preferred at low temperatures (e.g., about 260°C), with about 1.0 or less more preferred, and about 0.75 or less especially preferred. Additionally, an RL/LR of about 1.25 or less, with about 1.0 or less preferred at high temperatures (e.g., about 595°C).

**TABLE I**

| | Method | Vmin (mV) | Vmax (mV) | LR time (ms) | RL time (ms) | RL/LR ratio | Resist.* (ohms) |
|---|---|---|---|---|---|---|---|
| 1 | sputtered outer striped inner | 75 | 861 | 29 | 74 | 2.6 | 2768 |
| 2 | plated outer plated inner | 104 | 842 | 69 | 127 | 1.8 | 2680 |
| 3 | sputtered outer dipped inner | 88 | 872 | 23 | 85 | 3.7 | 2475 |
| 4 | dipped outer striped inner | 79 | 813 | 36 | 69 | 1.9 | 2640 |
| 5 | dipped outer dipped inner | 84 | 807 | 32 | 58 | 1.8 | 1870 |
| 6 | dipped outer dipped inner (yttria rich) | 75 | 785 | 74 | 42 | 0.6 | 1610 |

| | | | | | | | |
|---|---|---|---|---|---|---|---|
| 0.5 Hz at 260°C (12W Heater) *resist. is resistance; mV is millivolt | | | | | | | |

**TABLE II**

| | Method | Vmin (mV) | Vmax (mV) | LR time (ms) | RL time (ms) | RL/LR ratio |
|---|---|---|---|---|---|---|
| 1 | sputtered outer striped inner | 86 | 789 | 27 | 41 | 1.5 |
| 2 | plated outer plated inner | 165 | 823 | 39 | 91 | 2.3 |
| 3 | sputtered outer dipped inner | 113 | 794 | 14 | 35 | 2.5 |
| 4 | dipped outer striped inner | 91 | 786 | 21 | 38 | 1.8 |
| 5 | dipped outer dipped inner | 107 | 807 | 14 | 28 | 2.0 |
| 6 | dipped outer dipped inner (yttria rich) | 96 | 763 | 29 | 28 | 1.0 |
| 2 Hz at 595°C, 0.3 A/F | | | | | | |

This conical sensor comprises an electrolyte having a lower impedance (e.g., below about 2,000 ohms, wherein conventional conical sensors have an impedance of greater than 2,400 ohms), flat plat and wide range have much higher purity and therefore much lower resistance. In particular the wide range sensor must be below 100 ohms, preferably below 40 ohms and most preferred below 30 ohms and a lower firing temperature that minimizes de-activation of the electrode. The electrolyte firing temperature is preferably about 1,430°C to about 1,480°C, wherein conventional zirconia electrolyte firing temperatures are about 1,500°C. This is particularly relevant when forming a co-fired sensor where the electrode can over-sinter at temperatures exceeding about 1,475°C. Since the electrolyte preferably comprises a co-reacted zirconia, yttria, alumina body, in addition to the sintering temperature being reduced, the silica content being about 0.05 mole% or less, with about 0.005 mole % or less preferred, and therefore the impedance is reduced.

Unlike conventional electrodes, slip formed electrodes have substantially increased porosity, e.g., about 15% or greater, with about 20% or greater preferred, about 25% or greater more preferred, and about 30% to about 50% most preferred. In contrast, plated electrodes comprise a porosity up to about 2%, sputtered electrodes have a porosity of about 5% or less, and screen printed sensors have a porosity of up to about 10%, with about 6% to 7% common. Additionally, the slip formed electrodes possess a virtually instantaneous switching while conventional sensors can experience a switching time of 200 milliseconds (ms).

While preferred embodiments have been shown and described, various modifications and substitutions may be made thereto without departing from the spirit and scope of the invention. Accordingly, it is to be understood that the present invention has been described by way of illustration and not limitation.

## Claims

1. A method for manufacturing a sensor (30), comprising:
applying a slip to an electrolyte (20) to form an assembly comprising a sensing electrode (21) with a first side in contact with a first side of said electrolyte (20), and a reference electrode (22) with a first side in contact with a second side of said electrolyte (20); and
heating said assembly at a temperature of less than about 1,500°C.

2. The method for manufacturing a sensor (30) as in Claim 1, wherein said electrolyte (20) comprises zirconia.

3. The method for manufacturing a sensor (30) as in Claim 2, wherein said electrolyte (20) further comprises yttria.

4. The method for manufacturing a sensor (30) as in Claim 1, wherein said electrolyte (20) further comprises alumina.

5. The method for manufacturing a sensor (30) as in Claim 1, wherein said electrolyte (20) comprises a silica content of about 0.05 mole% or less.

6. The method for manufacturing a sensor (30) as in Claim 5, wherein said electrolyte (20) comprises a silica content of about 0.005 mole% or less.

7. The method for manufacturing a sensor (30) as in Claim 1, wherein the sensor (30) has a RL/LR of about 1.5 or less at about 260°C.

8. The method for manufacturing a sensor (30) as in Claim 7, wherein the sensor (30) has a RL/LR of about 1.0 or less at about 260°C.

9. The method for manufacturing a sensor (30) as in Claim 8, wherein the sensor (30) has a RL/LR of about 0.75 or less at about 260°C.

10. The method for manufacturing a sensor (30) as in Claim 1, wherein the sensor (30) has a RL/LR of about 1.25 or less at about 595°C.

11. The method for manufacturing a sensor (30) as in Claim 10, wherein the sensor (30) has a RL/LR of about 1.0 or less at about 595°C.

12. The method for manufacturing a sensor (30) as in Claim 1, further comprising dipping said electrolyte (20) in said slip.

13. The method for manufacturing a sensor (30) as in Claim 12, wherein said slip further comprises a first material selected from the group consisting of platinum, palladium, gold, osmium, rhodium, iridium, silver, ruthenium, zirconium, yttrium, cerium, calcium, aluminum, and alloys, oxides, and combinations comprising at least one of the foregoing first materials.

14. The method for manufacturing a sensor (30) as in Claim 13, wherein said slip further comprises a second material selected from the group consisting of alumina, zirconia, yttria, ceria, strontia, strontium cerium zirconates, barium cerium zirconates, lanthana, magnesia, scandia, and alloys, oxides, and combinations comprising at least one of the foregoing second materials.

15. The method for manufacturing a sensor (30) as in Claim 14, wherein said slip further comprises a second material selected from the group consisting of yttria-zirconia, yttria-alumina, scandia-zirconia, scandia-alumina, yttria-alumina-zirconia, scandia-alumina-zirconia, barium cerium oxide, and alloys, oxides, and combinations comprising at least one of the foregoing second materials.

16. The method for manufacturing a sensor (30) as in Claim 15, wherein said slip comprises platinum and zirconia.

17. The method for manufacturing a sensor (30) as in Claim 13, wherein said slip further comprises a substance selected from the group consisting of fugitive materials, dissolved organics, dissolved organometallics, and combinations comprising at least one of the foregoing substances.

18. The method for manufacturing a sensor (30) as in Claim 17, wherein said fugitive materials are selected from the group consisting of carbon black, graphite, and combinations comprising at least one of the foregoing fugitive materials.

19. The method for manufacturing a sensor (30) as in Claim 17, wherein said dissolved organics are selected from the group consisting of acrylic binders, polyvinyl alcohol, 1-ethoxypropan-2-ol, turpentine, squeegee medium, 1-methoxy-2-propanol acetate, butyl acetate, dibutyl phthalate, fatty acids, acrylic resin, ethyl cellulose, 3-hydroxy,2,2,4-trimethylpentyl isobutyrate, terpineol, butyl carbitol acetate, cetyl alcohol, cellulose ethylether resin, and combinations comprising at least one of the foregoing dissolved organics.

20. The method for manufacturing a sensor (30) as in Claim 17, wherein said dissolved organometallics are selected from the group consisting of zirconium 2-ethyl hexanoate, yttrium 2-ethylhexanoate, aluminum methoxyethanol, zirconium neodecanoates, zirconium naphthenates, zirconium tallates, zirconium carboxylates, yttrium 2-ethyl hexanoate, yttrium neodecanoates, yttrium naphthenates, yttrium tallates, yttrium carboxylates, scandium 2-ethyl hexanoate, aluminum isopropoxide, aluminum 2-ethylhexanoate, aluminum 2-methoxyethanol, and combinations comprising at least one of the foregoing organometallics.

21. The method for manufacturing a sensor (30) as in Claim 1, wherein said temperature is less than about 1,450°C.

22. The method for manufacturing a sensor (30) as in Claim 1, further comprising disposing a protective layer (31) adjacent to a second side of said first electrolyt e(20).

23. The method for manufacturing a sensor (30) as in Claim 22, further comprising disposing said protective layer (31) adjacent to a second side of said first electrolyte (20) prior to heating said assembly.

24. A method for the manufacturing an electrochemical cell, comprising:
slip casting an electrolyte (20) with a slip to form a sensing electrode (21) with a first side in contact with a first side of said electrolyte(20), and a reference electrode (22) with a first side in contact with a second side of said electrolyte(20); and
firing said electrolyte (20) and said sensing electrode (21) and said reference electrode (22) at a temperature less than about 1,500°C.

25. A method for manufacturing an electrochemical cell as in Claim 24, wherein said firing temperature is less than about 1,480°C.

26. A method for manufacturing an electrochemical cell as in Claim 25, wherein said firing temperature is about 1,400°C to about 1,450°C.

27. A method for manufacturing an electrochemical cell as in Claim 24, wherein said slip further comprises a first material selected from the group consisting of platinum, palladium, gold, osmium, rhodium, iridium, silver, ruthenium, zirconium, yttrium, cerium, calcium, aluminum, and alloys, oxides, and combinations comprising at least one of the foregoing first materials.

28. A method for manufacturing an electrochemical cell as in Claim 27, wherein said slip further comprises a second material selected from the group consisting of alumina, zirconia, yttria, ceria, strontia, strontium cerium zirconates, barium cerium zirconates, lanthana, magnesia, scandia, and alloys, oxides, and combinations comprising at least one of the foregoing second materials.

29. A method for manufacturing an electrochemical cell as in Claim 28, wherein said slip further comprises a second material selected from the group consisting of yttria-zirconia, yttria-alumina, scandia-zirconia, scandia-alumina, yttria-alumina-zirconia, scandia-alumina-zirconia, barium cerium oxide, and alloys, oxides, and combinations comprising at least one of the foregoing second materials.

30. A method for manufacturing an electrochemical cell as in Claim 27, wherein said slip further comprises a substance selected from the group consisting of fugitive materials, dissolved organics, dissolved organometallics, and combinations comprising at least one of the foregoing substances.

31. A method for manufacturing an electrochemical cell as in Claim 30, wherein said fugitive materials are selected from the group consisting of carbon black, graphite, and combinations comprising at least one of the foregoing fugitive materials.

32. A method for manufacturing an electrochemical cell as in Claim 30, wherein said dissolved organics are selected from the group consisting of acrylic binders, polyvinyl alcohol, 1-ethoxypropan-2-ol, turpentine, squeegee medium, 1-methoxy-2-propanol acetate, butyl acetate, dibutyl phthalate, fatty acids, acrylic resin, ethyl cellulose, 3-hydroxy,2,2,4-trimethylpentyl isobutyrate, terpineol, butyl carbitol acetate, cetyl alcohol, cellulose ethylether resin, and combinations comprising at least one of the foregoing dissolved organics.

33. A method for manufacturing an electrochemical cell as in Claim 30, wherein said dissolved organometallics are selected from the group consisting of zirconium 2-ethyl hexanoate, yttrium 2-ethylhexanoate, aluminum methoxyethanol, zirconium neodecanoates, zirconium naphthenates, zirconium tallates, zirconium carboxylates, yttrium 2-ethyl hexanoate, yttrium neodecanoates, yttrium naphthenates, yttrium tallates, yttrium carboxylates, scandium 2-ethyl hexanoate, aluminum isopropoxide, aluminum 2-ethylhexanoate, aluminum 2-methoxyethanol, and combinations comprising at least one of the foregoing organometallics.

34. A sensor (30) comprising:
an electrolyte (20) disposed between a sensing electrode (21) and a reference electrode (22), wherein at least one of said sensing electrode (21) and said reference electrode (22) has a porosity of about 15% or greater; and
a protective layer (31) with a first side in contact with a second side of said sensing electrode (21).

35. The sensor (30) as in Claim 34, wherein at least one of said sensing electrode (21) and said reference electrode (22) have a porosity of about 20% or greater.

36. The sensor (30) as in Claim 35, wherein at least one of said sensing electrode (21) and said reference electrode (22) have a porosity of about 25% or greater.

37. The sensor (30) as in Claim 36, wherein at least one of said sensing electrode (21) and said reference electrode (22) have a porosity of about 30% to about 50%.

38. The sensor (30) as in Claim 34, further comprising a RL/LR of about 1.5 or less at temperatures of about 260°C.

39. The sensor (30) as in Claim 38, further comprising a RL/LR of about 1.0 or less at temperatures of about 260°C.

40. The sensor (30) as in Claim 39, further comprising a RL/LR of about 0.75 or less at temperatures of about 260°C.

41. The sensor (30) as in Claim 34, further comprising a RL/LR of about 1.0 or less at temperatures of about 595°C.
